# EUROPEAN PATENT APPLICATION

(11) **EP 4 841 870 A1**
(43) Date of publication of application: **18.11.2026**
(21) Application number: 25176600.2
(22) Date of filing: 15.05.2025
(51) Int. Cl.: H02M 1/00, H02M 1/38, H02M 3/00, H02M 3/335

(54) **POWER CONVERTER WITH BOOST PULSE CONTROL**

(71) Applicant: Tridonic GmbH & Co. KG, 6851 Dornbirn (AT)
(72) Inventor: Schneider, Miguel Philipp, 6851 Dornbirn (AT); Lochmann, Frank, 6851 Dornbirn (AT)
(74) Representative: Rupp, Christian

(57) **Abstract**

The present invention provides an electrical power converter. Said power converter comprises a primary-side switching circuit including a high-side switch and a low-side switch connected in series between a supply voltage and ground. The power converter further comprises a resonant tank circuit and a transformer having a primary winding coupled to the resonant tank circuit and one or more secondary windings. The resonant tank circuit is coupled to a midpoint node between the high-side and low-side switches, and the transformer. Said power converter further comprises a control circuitry configured to control the high-side and low-side switches to switch alternately with a defined on-time and a dead time between switching transitions; and during the dead time following switching off the high-side switch or the low-side switch, generate a boost pulse by momentarily switching on that switch prior to switching on the other switch.

## Description

### TECHNICAL FIELD

The present invention relates to power electronics, particularly to intermediate bus converters (IBCs) used in switched-mode power supplies. The invention is applicable to high-current, low-voltage applications, such as power delivery for graphics processing units (GPUs) in data centers, as well as other demanding environments including LED lighting systems, industrial automation, and telecommunications infrastructure.

### BACKGROUND

Intermediate Bus Converters (IBCs) are widely used in switched-mode power supplies (SMPS) to efficiently deliver low output voltages at high currents. These converters play a vital role in power delivery networks for data centers, high-density servers, artificial intelligence accelerators, and advanced lighting systems including luminaires, ballasts, and LED drivers.

To reduce power losses and improve conversion efficiency, soft-switching techniques such as resonant LLC topologies are widely adopted. These topologies rely on zero-voltage switching (ZVS) to minimize switching losses and electromagnetic interference (EMI), especially under high current conditions. However, maintaining ZVS over a wide load range-particularly at high output currents-remains a technical challenge.

Additionally, prolonged dead times between switching events can lead to uncontrolled oscillations at the midpoint node between the converter's switching elements. These oscillations can interfere with the desired switching behavior, increase switching losses, and reduce system efficiency. Moreover, traditional designs often require large output capacitors to suppress voltage ripple, leading to increased system size, cost, and complexity.

There is a continuing need for improved converter designs that address these challenges while maintaining high efficiency, scalability, and reliability in demanding high-current applications.

### SUMMARY

In view of the above-discussed limitations, the invention aims to enhance the performance of LLC-based power converters by introducing a technique to actively stabilize the midpoint voltage during dead times, improving soft-switching conditions and reducing switching losses. It further supports high-current delivery through scalable transformer and rectification architectures, making it particularly well-suited for data center, industrial, and lighting applications.

These and other objectives are achieved by the solution of this disclosure as described in the independent claims. Advantageous implementations are further defined in the dependent claims.

According to a first aspect of the invention, an electrical power converter is provided. Said electrical power converter comprises a primary-side switching circuit including a high-side switch and a low-side switch connected in series between a supply voltage and ground, wherein a midpoint node is defined at the connection between the high-side and low-side switches. The electrical power converter further comprises a resonant tank circuit and a transformer. The resonant tank circuit is coupled to the midpoint node and the transformer. The transformer has a primary winding coupled to the resonant tank circuit and one or more secondary windings.

Said electrical power converter further comprises a control circuitry configured to control the high-side and low-side switches to switch alternately with a defined on-time and a dead time between switching transitions; and during the dead time following switching off the high-side switch or the low-side switch, generate a boost pulse by momentarily switching on that switch prior to switching on the other switch.

The invention provides an electrical power converter, particularly an LLC-based electrical power converter incorporating a high-side and low-side switch that are alternately controlled, with a resonant tank connected to a transformer. The resonant tank circuit may comprise a resonant capacitor and a resonant inductor. The introduction of a boost pulse during the dead time avoids excessive voltage oscillation at the midpoint node. This brief activation ensures that the oscillating midpoint voltage is brought back to a defined level (either high or low) before the next switch is turned on. The technical effect of this approach is the stabilization of the midpoint voltage, enabling the next switching transition to occur with minimal switching losses and improved zero-voltage switching (ZVS) conditions. This enhances the efficiency and reliability of the converter, particularly when handling the very high current demands typical in GPU power supplies for data centers.

According to an implementation form of the first aspect of the invention, the boost pulse has a shorter duration than the defined on-time.

Notably, the duration of the boost pulse is significantly shorter than the main on-time of the respective switch. The technical significance of this lies in the fact that the short pulse is sufficient to restore the desired midpoint voltage without substantially disturbing the resonant operation or causing new oscillations. By limiting the duration of the boost, the converter maintains efficiency and prevents unintended energy transfer that could degrade performance or reliability. This fine-tuned control preserves the benefits of soft-switching while minimizing interference with the normal energy conversion process.

According to a further implementation form of the first aspect of the invention, the control circuitry is further configured to initiate the boost pulse based on a predetermined timing condition associated with oscillation behavior at the midpoint node.

In this configuration, the boost pulse can be triggered based on a predefined timing condition that relates to the known behavior of oscillations in the midpoint voltage. Importantly, the boost pulse is applied in response to the inherent voltage oscillation dynamics at the midpoint node. This allows the converter to proactively correct voltage deviations and support low-loss switching transitions, improving efficiency and reliability under high-current operation.

According to a further implementation form of the first aspect of the invention, the control circuitry is further configured to monitor a voltage at the midpoint node to determine a timing to initiate the boost pulse.

In this configuration, the control circuitry actively monitors the voltage at the midpoint node to determine the timing of the boost pulse. This real-time feedback allows the converter to observe voltage fluctuations and respond adaptively to actual circuit behavior, including component tolerances and load variations. The advantage of this implementation is an increased degree of control precision, ensuring that the boost pulse is applied at the ideal moment to prevent voltage drift and minimize switching losses.

According to a further implementation form of the first aspect of the invention, the control circuitry is further configured to detect a transition from a stable to an oscillating voltage phase at the midpoint node, for example using a voltage comparator, to determine a timing to initiate the boost pulse.

This configuration defines an alternative implementation in which the control circuitry detects a transition from a stable to an oscillating phase at the midpoint voltage node, for example using a voltage comparator. Rather than continuous monitoring, this detection-based approach focuses on identifying the onset of oscillation and then using predictive or calculated timing to trigger the boost pulse. The advantage is a streamlined and cost-effective control method that reduces processing or sensing overhead while still providing timely correction of the midpoint voltage to support efficient switching transitions.

According to a further implementation form of the first aspect of the invention, the control circuitry is further configured to determine an interval between the boost pulse and a time of switching on the other switch, such that a voltage at the midpoint node is stabilized at a predetermined level before the time of switching on the other switch.

The control system ensures that there is a sufficient delay after the boost pulse before turning on the next switch, allowing the midpoint voltage to stabilize at the desired level. The technical benefit here is that it prevents the initiation of a new oscillation phase and ensures that the upcoming switch transitions occur under optimal voltage conditions. This results in consistently low switching losses and helps maintain reliable ZVS operation throughout the cycle.

According to a further implementation form of the first aspect of the invention, the transformer is a matrix transformer comprising a plurality of secondary windings connected in parallel, each configured to deliver a portion of a total output current.

This configuration distributes the high output current across several paths, reducing the current stress on individual components. The technical effect is a substantial improvement in thermal performance and current handling capability. It also facilitates a modular and scalable design, which is highly advantageous in data center power supplies where efficient delivery of very high currents is critical.

According to a further implementation form of the first aspect of the invention, the electrical power converter further comprises one or more secondary-side rectification circuits, each being connected to a respective secondary winding and outputting an output voltage.

The power converter includes multiple rectification circuits on the secondary side, each associated with a respective secondary winding. The output currents are thus distributed and rectified separately. This arrangement complements the matrix transformer configuration and ensures that each path efficiently converts the AC signal to DC with reduced conduction losses. This allows an improved conversion efficiency, enhanced thermal distribution, and increased output current capacity, which are essential for powering high-performance GPUs and similar loads.

According to a further implementation form of the first aspect of the invention, transformer is configured such that a winding ratio between the primary and each secondary winding is substantially equal.

The transformer is designed such that the winding ratio between the primary and each secondary winding is close to one-to-one. This design choice minimizes voltage transformation and associated core losses, which are typically more pronounced at higher step-down ratios. The technical effect is an increase in power transfer efficiency and a reduction in magnetic saturation risk. This also supports the high-current, low-voltage output requirements typical in modern high-performance computing applications.

According to a second aspect of the invention, a method for operating an electrical power converter is provided. The power converter comprises a high-side switch, a low-side switch, a resonant circuit, and a transformer. The electrical power converter may be the electrical power converter according to the first aspect or any implementation form of the first aspect.

The method comprises alternately switching the high-side and low-side switches with a defined on-time and a dead time between switching transitions; and during the dead time following switching off the high-side switch or the low-side switch, generating a boost pulse by momentarily switching on that switch prior to switching on the other switch, to stabilize a voltage at a midpoint node between the high-side and low-side switches.

The invention further provides an operational cycle of the proposed electrical power converter. It outlines the alternating control of the high-side and low-side switches, with the insertion of a brief boost pulse during dead time to stabilize the midpoint voltage. The technical effect of this method is to achieve smooth switching transitions with minimal losses by correcting oscillations proactively. This systematic approach ensures consistent efficiency gains and protects the converter from timing-related instability or component stress.

According to an implementation form of the second aspect of the invention, the method further comprises initiating the boost pulse based on a predetermined timing condition associated with oscillation behavior at the midpoint node.

This ensures a consistent stabilization of the midpoint voltage before the next switching transition, which reduces switching losses and supports efficient soft-switching operation, which is particularly important in high-current power conversion applications like data center GPU supplies.

According to a further implementation form of the second aspect of the invention, the method further comprises monitoring a voltage at the midpoint node to determine a timing to initiate the boost pulse.

By observing the voltage waveform in real time, the control system can precisely identify when the midpoint begins to deviate from its stable level and, accordingly, trigger a corrective boost pulse. The technical effect of this method is adaptive and precise voltage stabilization under varying operating conditions, such as changes in load, temperature, or component drift. This enhances switching reliability and maximizes energy efficiency by maintaining optimal zero-voltage switching conditions.

According to a further implementation form of the second aspect of the invention, the method further comprises detecting a transition from a stable to an oscillating voltage phase at the midpoint node, for example, using a voltage comparator, to determine a timing to initiate the boost pulse.

Rather than requiring continuous monitoring, this implementation relies on an event-based trigger, which may be followed by a timing mechanism that predicts future oscillation peaks or valleys based on known resonance characteristics. The technical effect is a streamlined and resource-efficient control strategy that enables timely correction of the midpoint voltage without requiring complex or high-speed sensing systems. It is particularly advantageous in cost-sensitive or high-density converter designs.

According to a further implementation form of the second aspect of the invention, the method further comprises determining an interval between the boost pulse and a time of switching on the other switch, such that a voltage at the midpoint node is stabilized at a predetermined level before the time of switching on the other switch.

This method ensures that the interval between the boost pulse and the subsequent switching of the opposing switch is carefully chosen to allow voltage stabilization. The technical effect is the prevention of new oscillations or incomplete voltage correction, thus facilitating low-loss, stress-free switching that enhances the durability and performance of the converter components.

According to a third aspect of the invention, a power delivery system is provided. The power delivery system comprises a load device configured to operate at a low DC voltage and high current; and an electrical power converter according to the first aspect or any implementation forms of the first aspect of the invention, wherein the electrical power converter is configured to supply power to the load device.

Optionally, the load device comprises a GPU, a lighting module, or an array of LEDs.

All steps that are performed by the various components described in this application, as well as the functionalities described to be performed by the various components, are intended to mean that the respective component is adapted to or configured to perform the respective steps and functionalities. Even if, in the following description of specific embodiments, a specific functionality or step to be performed by external components is not reflected in the description of a specific detailed element of that component that performs that specific step or functionality, it should be clear to a skilled person that these methods and functionalities can be implemented in respective software or hardware elements, or any kind of combination thereof.

### BRIEF DESCRIPTION OF DRAWINGS

The above-described aspects and implementation forms are now further explained with respect to the drawings by way of example only, and not for limitation. In the drawings:
- Fig. 1: shows an exemplary electrical power converter according to an embodiment of this invention.
- Fig. 2: shows a timing diagram related to the operation of the electrical power converter according to an embodiment of this invention.
- Fig. 3: shows a method according to an embodiment of this invention.

### DETAILED DESCRIPTION OF EMBODIMENTS

Illustrative embodiments of an electrical power converter, a power delivery system, and a method for operating the electrical power converter are described with reference to the figures. Although this description provides a detailed example of possible implementations, it should be noted that the details are intended to be exemplary and in no way limit the scope of the application.

An embodiment/example may refer to other embodiments/examples. For example, any description including but not limited to terminology, element, process, explanation, and/or technical advantage mentioned in one embodiment/example is applicable to the other embodiments/examples. The same elements are labeled with the same reference signs and may function similarly or likewise.

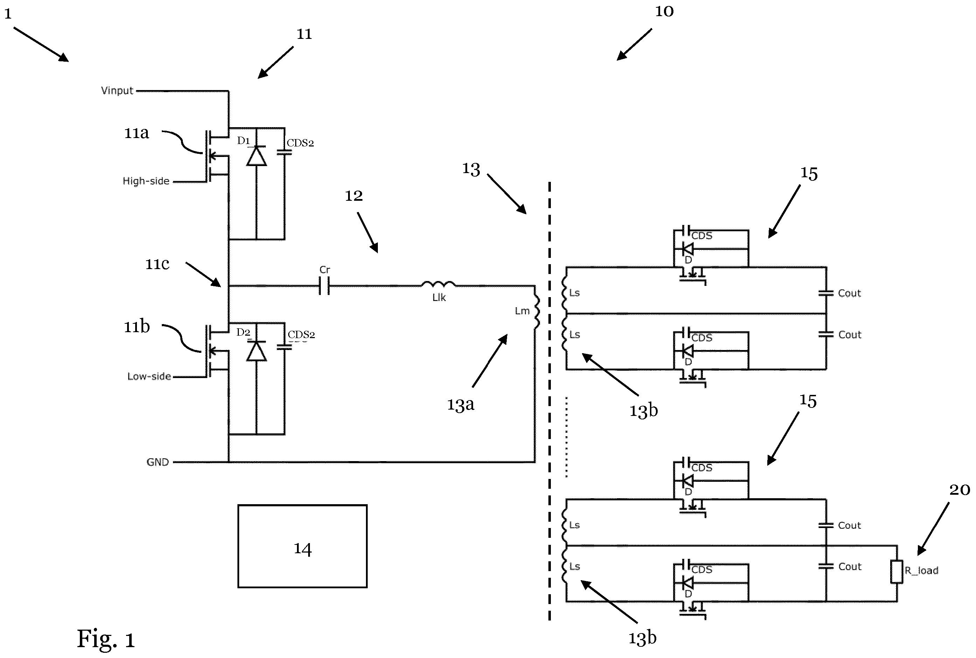

With respect to Fig. 1, an exemplary embodiment of an electrical power converter 10 is illustrated. The electrical power converter 10 comprises a primary-side switching circuit 11, a resonant tank circuit 12, a transformer 13, and a control circuitry 14.

The primary-side switching circuit 11 includes a high-side switch 11a and a low-side switch 11b connected in series between a supply voltage (Vinput) and ground. The connection point between the high-side switch 11a and the low-side switch 11b defines a midpoint node 11c. This midpoint node 11c serves as the input to the resonant tank circuit 12.

The resonant tank circuit 12 is connected between the midpoint node 11c and the primary winding 13a of a transformer 13. The resonant tank circuit 12 may include one or more inductive and capacitive components arranged to establish resonant conditions during operation, for instance, a resonant capacitor Cr, a resonant inductor Llk and a magnetization inductor Lm.

The transformer 13 includes a primary winding 13a coupled to the output of the resonant tank circuit 12, and one or more secondary windings 13b on the secondary side. Possibly, the inductor Lm can be formed by or connected to the primary winding 13a of the transformer 13.

A control circuit 14 is provided to manage the operation of switches. While not shown in detail in Fig. 1, the control circuitry 14 is operably connected to the high-side switch 11a and low-side switch 11b to provide appropriate gate drive signals for alternating operation. The control circuitry 14 may be implemented using analog or digital control logic, microcontrollers, gate driver ICs, or a combination thereof. The specific arrangement and signal pathways are omitted for clarity and may vary depending on implementation, but would be understood by a person skilled in the art. The invention is not limited to any particular control circuit layout.

The control circuitry 14 is configured to operate the switches 11a and 11b alternately, each with a defined on-time and a dead time between transitions. In other words, the control circuit 14 alternately turns the high-side and low-side switches on and off with a defined on-time, and inserts a dead time between transitions. During the dead time following turn-off of either the high-side switch 11a or the low-side switch 11b, the control circuitry 14 is further configured to generate a boost pulse by momentarily switching on the same switch prior to activating the other switch. This boost pulse serves to stabilize the voltage at the midpoint node 11c, to address issues arising from prolonged dead times.

In one embodiment, the transformer 13 may preferably be implemented as a matrix transformer. The transformer 13 may comprise a plurality of secondary windings 13b connected in parallel. These secondary windings 13b are configured to supply a rectified output voltage Vout at high current and low voltage. For instance, each secondary winding 13b may be connected to an individual secondary-side rectifier circuit 15, which provides a regulated output voltage (V_OUT) at high current and low voltage.

The transformer 13 may comprise at least one primary winding 13a. The primary winding 13a of the transformer 13 could be formed by a single winding or multiple winding elements which are connected in series. The at least one primary winding 13a can be magnetically coupled to the plurality of secondary windings 13b, i.e., to each of the plurality of secondary windings.

In preferred embodiments, the transformer 13 is designed with a winding ratio between the primary and secondary windings that is substantially one-to-one, thereby enabling efficient high-current transfer. However, also other winding ratios between primary and secondary windings are possible.

In one embodiment, the plurality of secondary windings Ls can be connected in parallel, wherein each secondary winding 13b is connected to a synchronous rectifier SR, which can comprise a switch with a diode D and a capacitor CDS connected in parallel. The converter can further comprise a number of output capacitors, Cout, which can smooth an output voltage before forwarding it to a load R_load.

The electrical power converter 10 can be used for power delivery to a CPU, a GPU, or another component with a high power demand, e.g., in a datacenter environment.

It may be understood that Fig. 1 also shows a power delivery system 1 comprising a load device 20 configured to operate at a low DC voltage and high current, and the electrical power converter 10.

In various embodiments, the load device 10 may include, but is not limited to, a GPU in a server or data center, an industrial computing module, or a lighting system such as an LED array, luminaire, or ballast.

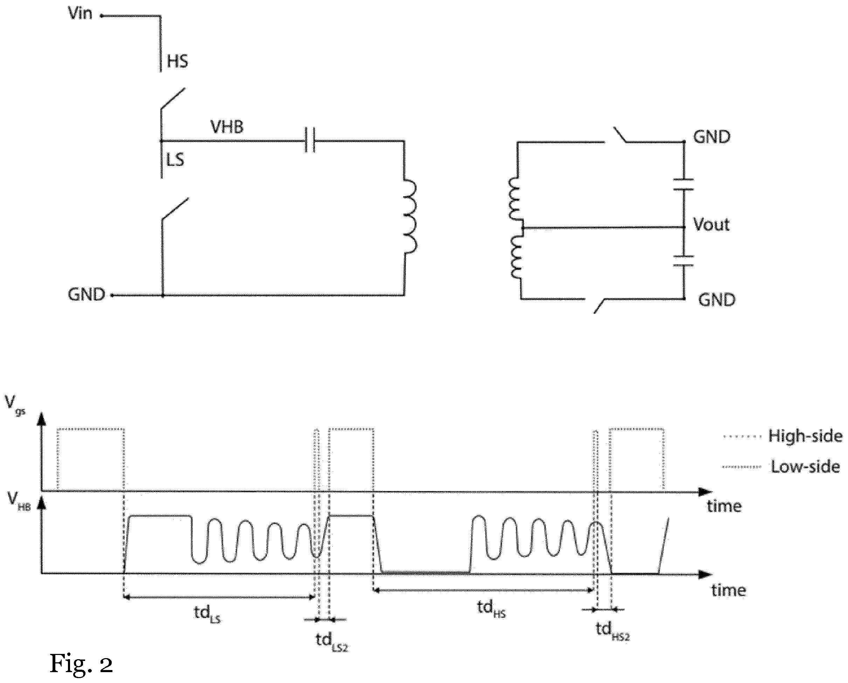

Fig. 2 shows a timing diagram related to the operation of the electrical power converter 10 of Fig. 1. In particular, it shows the gate drive signals (V_g) for the high-side (red) and low-side (blue) switches, alongside the voltage (V_HB) at the midpoint node 11c over time.

The switching cycle proceeds as follows:
1. Normal On-Time of Low-Side Switch (Ton_LS):
   At the beginning of the cycle, the low-side switch 11b is turned on. This allows current to flow through the resonant tank circuit 12 and transformer primary 13a. During this period, the midpoint voltage V_HB is pulled low, approaching ground potential.
2. Dead Time after Low-Side Switch Turn-Off (Td_LS):
   After a defined on-time, the low-side switch 11b is turned off. The midpoint node 11c enters a dead time. Initially, V_HB remains stable, but as resonant energy continues to redistribute, the voltage begins to rise and eventually oscillates due to LC resonance.
3. Boost Pulse from Low-Side (within Td_LS2):
   To stabilize V_HB and ensure favorable zero-voltage switching (ZVS) conditions for the high-side switch 11a, a short-duration boost pulse is applied by momentarily turning low-side switch 11b back on. This raises V_HB toward Vin, canceling oscillations and restoring a stable high level. The timing and duration of this boost are selected such that no new oscillations are introduced.
4. Normal On-Time of High-Side Switch (Ton_HS):
   The high-side switch 11a is then turned on, with the midpoint voltage V_HB already stabilized at a high level. Current flows from Vin through the resonant tank and transformer, and V_HB remains high during this interval.
5. Dead Time after High-Side Turn-Off (Td_HS):
   After the high-side switch 11a is turned off, the converter 10 again enters a dead time. The midpoint voltage V_HB initially stays high, but then begins to fall and oscillate due to resonance in the circuit.
6. Boost Pulse from High-Side (Td_HS2):
   A short boost pulse is now applied by briefly turning high-side switch 11a back on, injecting energy to pull V_HB down to a stable low level, near ground. This restores favorable conditions for the next activation of the low-side switch 11b and supports ZVS operation.

This sequence repeats over each switching cycle. Fig. 2 illustrates how the insertion of precisely timed boost pulses during the dead times, each initiated by briefly reactivating the previously turned-off switch, counteracts oscillations and stabilizes the midpoint voltage. This operation enhances soft-switching performance, reduces switching losses, and improves converter efficiency, especially in high-current applications.

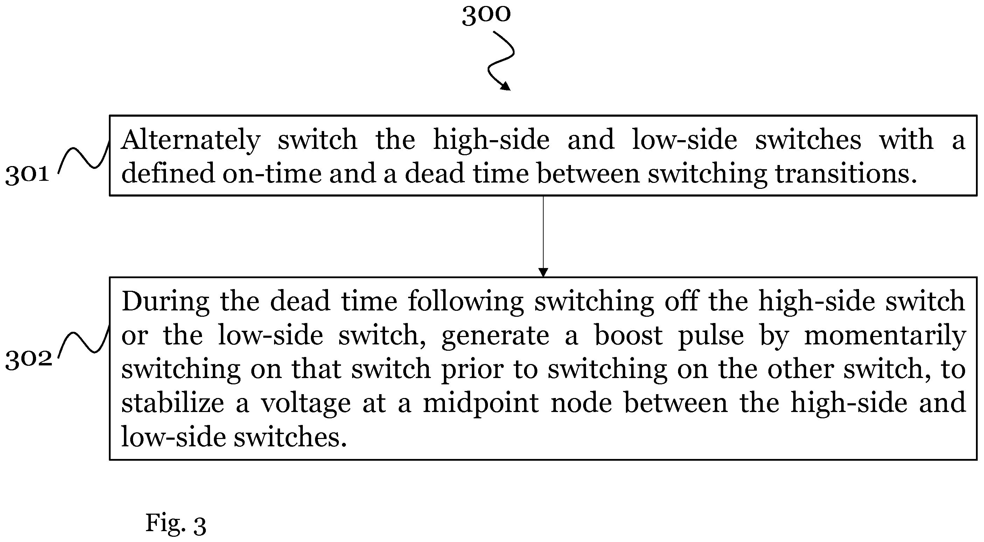

Fig. 3 illustrates a flowchart representing an embodiment of the method 300 for operating the electrical power converter 10 according to the invention. The electrical power converter 10 may be the electrical power converter described in the previous embodiments, as shown in Fig. 1.

The method comprises a step 301 of alternately switching the high-side and low-side switches with a defined on-time and a dead time between switching transitions.

The method further comprises a step 302 of, during the dead time following switching off the high-side switch or the low-side switch, generating a boost pulse by momentarily switching on that switch prior to switching on the other switch, to stabilize a voltage at a midpoint node between the high-side and low-side switches.

It may be understood that the operation of the electrical power converter 10 begins with the control circuitry 14 initializing and beginging alternating the switching of the high-side switch 11a and low-side switch 11b, each with a defined on-time.

After switching off the currently active switch (e.g., the low-side switch 11b), a dead time is introduced during which neither switch conducts. During this dead time, the midpoint voltage 11c may begin to oscillate due to the resonant behavior of the circuit.

Then, the control circuitry 14 determines whether a boost pulse should be applied, based on oscillation behavior at the midpoint node 11c. This decision may be based on predetermined timing (e.g., known resonance period), real-time voltage monitoring, or detection of a transition from a stable to oscillating phase.

If a boost pulse is to be applied, the method proceeds, where the same switch that was previously turned off (e.g., 11b) is briefly turned on again for a short duration. This boost pulse re-establishes the desired voltage level at the midpoint (e.g., raises V_HB after LS off, or lowers V_HB after HS off).

After the boost pulse, or if no boost pulse is needed, the method proceeds to turn on the other switch (e.g., high-side switch 11a), completing the switching cycle under improved conditions (e.g., ZVS). The process then loops back to repeat this control cycle.

This method ensures stable midpoint voltage, minimizes switching losses, and supports reliable, efficient soft-switching operation.

The foregoing description has presented exemplary embodiments of an electrical power converter and its method of operation, particularly suited for high-current, low-voltage applications such as GPU power delivery in data centers. Central to the invention is the incorporation of boost pulses during the dead time between switching events, which effectively stabilize the midpoint voltage and maintain favorable switching conditions, thereby improving overall efficiency and reducing switching losses.

Although the invention has been described with reference to specific components such as an LLC resonant topology, matrix transformer configurations, and particular timing control schemes, it should be understood that they have been presented by way of example only, and not by limitation. Numerous changes to the disclosed embodiments can be made in accordance with the disclosure herein without departing from the spirit or scope of the invention. Thus, the breadth and scope of the present invention should not be limited by any of the above-described embodiments. Rather, the scope of the invention should be defined in accordance with the following claims and their equivalents.

For example, boost pulse timing may be determined through different sensing or predictive methods, and the converter may be adapted for other applications, including LED lighting, telecommunications, or industrial systems. The transformer configuration, winding ratios, and rectification topologies may also be varied to meet different system requirements.

In addition, while a particular feature of the invention may have been disclosed with respect to only one of several implementations, such feature may be combined with one or more other features of the other implementations as may be desired and advantageous for any given or particular application.

## Claims

1. An electrical power converter (10) comprising:
a primary-side switching circuit (11) including a high-side switch (11a) and a low-side switch (11b) connected in series between a supply voltage and ground, wherein a midpoint node (11c) is defined at the connection between the high-side (11a) and low-side switches (11b);
a resonant tank circuit (12) coupled to the midpoint node (11c) and a transformer (13),
the transformer (13) having a primary winding (13a) coupled to the resonant tank circuit (12) and one or more secondary windings (13b), and
a control circuitry (14) configured to:
- control the high-side and low-side switches (11a, 11b) to switch alternately with a defined on-time and a dead time between switching transitions; and
- during the dead time following switching off the high-side switch (11a) or the low-side switch (11b), generate a boost pulse by momentarily switching on that switch prior to switching on the other switch.

2. The electrical power converter (10) according to claim 1, wherein the boost pulse has a shorter duration than the defined on-time.

3. The electrical power converter (10) according to any one of the preceding claims, wherein the control circuitry (14) is further configured to:
initiate the boost pulse based on a predetermined timing condition associated with oscillation behavior at the midpoint node (11c).

4. The electrical power converter (10) according to claim 3, wherein the control circuitry (14) is configured to:
monitor a voltage at the midpoint node (11c) to determine a timing to initiate the boost pulse.

5. The electrical power converter (10) according to claim 3, wherein the control circuitry (14) is further configured to:
detect a transition from a stable to an oscillating voltage phase at the midpoint node (11c), for example using a voltage comparator, to determine a timing to initiate the boost pulse.

6. The electrical power convertero (10) according to any one of the preceding claims, wherein the control circuitry (14) is further configured to:
determine an interval between the boost pulse and a time of switching on the other switch, such that a voltage at the midpoint node (11c) is stabilized at a predetermined level before the time of switching on the other switch.

7. The electrical power converter (10) according to any one of the preceding claims, wherein the transformer (13) is a matrix transformer comprising a plurality of secondary windings (13b) connected in parallel, each configured to deliver a portion of a total output current.

8. The electrical power converter (10) according to any one of the preceding claims, further comprising:
one or more secondary-side rectification circuits (15), each being connected to a respective secondary winding (13b) and outputting an output voltage.

9. The electrical power converter (10) according to any one of the preceding claims, wherein the transformer (13) is configured such that a winding ratio between the primary and each secondary winding is substantially equal.

10. A method (300) for operating an electrical power converter (10) comprising a high-side switch, a low-side switch, a resonant circuit, and a transformer, the method comprising:
- alternately switching (301) the high-side and low-side switches with a defined on-time and a dead time between switching transitions; and
- during the dead time following switching off the high-side switch or the low-side switch, generating (302) a boost pulse by momentarily switching on that switch prior to switching on the other switch, to stabilize a voltage at a midpoint node between the high-side and low-side switches.

11. The method (300) according to claim 10, further comprising:
initiating the boost pulse based on a predetermined timing condition associated with oscillation behavior at the midpoint node.

12. The method (300) according to claim 11, further comprising:
monitoring a voltage at the midpoint node to determine a timing to initiate the boost pulse.

13. The method (300) according to any one of claims 10 to 12, further comprising:
detecting a transition from a stable to an oscillating voltage phase at the midpoint node, for example using a voltage comparator, to determine a timing to initiate the boost pulse.

14. The method (300) according to any one of claims 10 to 13, further comprising:
determining an interval between the boost pulse and a time of switching on the other switch, such that a voltage at the midpoint node is stabilized at a predetermined level before the time of switching on the other switch.

15. A power delivery system (1) comprising:
a load device (20) configured to operate at a low DC voltage and high current; and
an electrical power converter (10) according to any one of claims 1 to 9, wherein the electrical power converter (10) is configured to supply power to the load device (20).

16. The power delivery system (1) according to claim 15, wherein the load device (20) comprises a graphics processing unit, a lighting module, or an array of LEDs.
